# EUROPEAN PATENT SPECIFICATION

(11) **EP 2 339 189 B1**
(45) Date of publication and mention of the grant of the patent: **15.05.2013**
(21) Application number: 09252885.0
(22) Date of filing: 22.12.2009
(51) Int. Cl.: F16B 25/10

(54) **Screw**
Schraube
Vis

(43) Date of publication of application: 29.06.2011
(73) Proprietor: Fong Prean Industrial Co., Ltd., Kaohsiung Hsien (TW)
(72) Inventor: Lin, Teng-Hung, Kaohsiung Hsien (TW)
(74) Representative: Treeby, Philip David William

(56) References cited:
- DE-A1- 19 848 717
- US-A- 1 801 186
- US-A- 2 242 758
- US-A- 3 643 543
- US-A- 3 861 269

## Description

### FIELD OF THE INVENTION

The present invention relates to screws, and in particular to a screw which is used to combine with a gypsum plate, a steel plate or plates of other materials.

### BACKGROUND OF THE INVENTION

Many prior art screw designs are aimed at to improve drilling speed, dreg removing speed, or final securing effect. The screw may have only one thread, or two threads, or the pitch angle of the thread is identical on the whole thread or the pitch angle is varied along the thread.

Meanwhile, the design of the thread must take the object to be combined into consideration. For example, when the general screws are used to combine with a steep plate or a gypsum plate by using an air screw driver, the impact from the screw will break the plate or a great crack is generated so a to affect the combination force.

US 2,242,758 describes a lag screw. The lag screw includes a drive head, a tapered body portion, a piercing point, said body portion being provided with a gimlet and fetter type thread, and said point being provided with a gimlet type thread, said threads forming a continuous helix on said screw.

### SUMMARY OF THE INVENTION

The object of the present invention is to provide a screw which serves to combine a gypsum plate or a thin steel plate or plates made of other material. The screw of the present invention has a first thread section near a screw head and a second thread section extending to a screw tip; an angle between a first surface of a thread of the second thread section and a second surface of the thread of the second thread section adjacent to the first surface of the thread of the second thread section is greater than 90 degrees. The second thread section includes only one thread or has two threads which are alternatively arranged.

When the screw is applied to a gypsum plate or thin steel plate, an air nail driver serves to drive the screw into a gypsum plate. The gypsum will not break due to the impact from the screw. Furthermore, the crack in the steel plate is small so as not to affect the combination force thereof. However, the application of the present invention is not confined to steel plate or gypsum plates. Other plates are permissible to be used in the present invention.

The various objects and advantages of the present invention will be more readily understood from the following detailed description when read in conjunction with the appended drawing.

### BRIEF DESCRIPTION OF THE DRAWINGS

Fig. 1 shows the embodiment of the present invention.
Fig. 2 is a partial cross sectional view of the present invention.

### DETAILED DESCRIPTION OF THE INVENTION

In order that those skilled in the art can further understand the present invention, a description will be provided in the following in details. However, these descriptions and the appended drawings are only used to cause those skilled in the art to understand the objects, features, and characteristics of the present invention, but not to be used to confine the scope and spirit of the present invention defined in the appended claims.

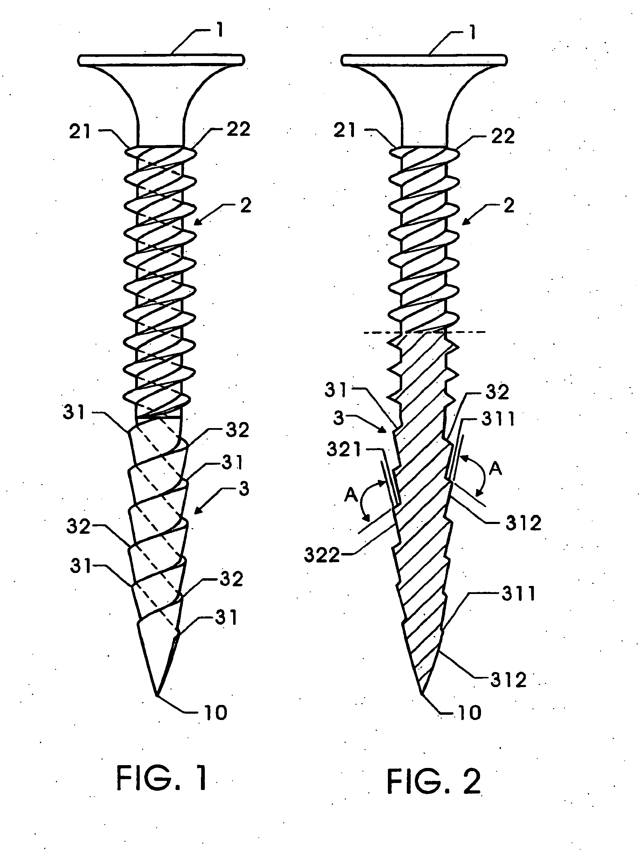

With reference to Fig. 1, the screw of the present invention serves for combing a gypsum plate or a thin steel plate or plates made of other material. A screw rod has a first thread section 2 and a second thread section 3. The first thread section 2 is near the screw head 1 and has a thread 21 and a thread 22. The thread 21 and the thread 22 are alternatively arranged. The second thread section 3 is near the tip 10 of the screw tip 10 and includes a thread 31 and a thread 33. The thread 3 land the thread 32 are alternatively arranged.

Referring to Fig. 2, an angle between a first surface 311 of the thread 31 of the second thread section 3 and a second surface 312 of the thread 31 of the second thread section 3 adjacent to the first surface 311 of the thread 31 of the second thread section 3 is greater than 90 degrees; and another angle between a third surface 321 of the thread 32 of the second thread section 3 and a fourth surface 322 of the thread 32 of the second thread section 3 adjacent to the third surface 321 of the thread 32 of the second thread section 3 is greater than 90 degrees. The thread 31 of the second thread section 3 extends to the screw tip 10.

In another embodiment of the present invention, the first thread section 2 has only one thread 21 and the second thread section 3 has only one thread 31. The thread 31 of the second thread section 3 extends to the screw tip 10.

Moreover, the present invention may be designed as the following. The first thread section 2 has only one thread 21 and the second thread section 3 has two threads which are thread 31 and thread 32. Or the first thread section 2 has only one thread 21 and the second thread section 3 has only one thread 31. Or the first thread section 2 has one thread 21 and one thread 22 and the second thread section 3 has only one thread 31. Or the first thread section 2 has two thread 21 and thread 22 and the second thread section 3 has two threads which are thread 31 and thread 32. However, the feature of the present invention is that: an angle between a first surface 311 of the thread 31 of the second thread section 3 and a second surface 312 of the thread 31 of the second thread section 3 adjacent to the first surface 311 of the thread 31 of the second thread section 3 is greater than 90 degrees; and another angle between a third surface 321 of the thread 32 of the second thread section 3 and a second surface 322 of the thread 32 of the second thread section 3 adjacent to the first surface 321 of the thread 32 of the second thread section 3 is greater than 90 degrees.

In the application of the present invention, when the screw is applied to a gypsum plate or thin steel pilate, an air nail driver serves to drive the screw into a gypsum plate. The gypsum will not break due to the impact from the screw. Furthermore, the crack in the steel plate is small so as not to affect the combination force thereof. However, the application of the present invention is not confined to steel plate or gypsum plates. Other plates are permissible to be used in the present invention.

## Claims

1. A screw having a first thread section (2) near a screw head (1) and a second thread section (3) extending to a screw tip (10); an angle between a first surface (311) of a thread (31) of the second thread section (3) and a second surface (312) of the thread (31) of the second thread section (3) adjacent to the first surface (311) of the thread (31) of the second thread section (3) is greater than 90 degrees.

2. The screw as claimed in claim 1, wherein the second thread section (3) includes only one thread.

3. The screw as claimed in claim 1, wherein the second thread section (3) has two threads which are alternatively arranged.

## Patentansprüche

1. Eine Schraube mit einem ersten Gewindeabschnitt (2) in der Nähe eines Schraubenkopfs (1) und einem zweiten Gewindeabschnitt (3), der sich zu einer Schraubenspitze (10) erstreckt; wobei ein Winkel zwischen einer ersten Fläche (311) eines Gewindes (31) des zweiten Gewindeabschnitts (3) und einer zweiten Fläche (312) des Gewindes (31) des zweiten Gewindeabschnitts (3) neben der ersten Fläche (311) des Gewindes (31) des zweiten Gewindeabschnitts (3) größer als 90 Grad ist.

2. Schraube nach Anspruch 1, wobei der zweite Gewindeabschnitt (3) nur ein Gewinde umfasst.

3. Schraube nach Anspruch 1, wobei der zweite Gewindeabschnitt (3) zwei Gewinde hat, die abwechselnd angeordnet sind.

## Revendications

1. Vis comportant une première section de filetage (2) proche d'une tête de vis (1) et une seconde section de filetage (3) s'étendant vers la pointe de la vis (10) ; un angle formé entre une première surface (311) d'un filet (31) de la seconde section de filetage (3) et une seconde surface (312) du filet (31) de la seconde section de filetage (3) adjacente à la première surface (311) du filet (31) de la seconde section de filetage (3) est supérieur à 90 degrés.

2. Vis selon la revendication 1, dans laquelle la seconde section de filetage (3) comporte seulement un filet.

3. Vis selon la revendication 1, dans laquelle la seconde section de filetage (3) comporte deux filets qui sont agencés de façon alternative.
